# EUROPEAN PATENT APPLICATION

(11) **EP 3 895 924 A1**
(43) Date of publication of application: **20.10.2021**
(21) Application number: 21167167.2
(22) Date of filing: 07.04.2021
(51) Int. Cl.: B60K 1/00

(54) **DRIVETRAIN SYSTEM FOR AN ELECTRIFIED VEHICLE**

(30) Priority: 15.04.2020 CN 202010294109
(71) Applicant: Valeo Management (Shanghai) Co. Ltd., Shanghai 200233 (CN)
(72) Inventor: JIN, Ye Jin, Shanghai 200233 (CN); CHEN, Kai-Kai, Shanghai 200233 (CN); SUN, Guoqiang, Shanghai 200233 (CN)
(74) Representative: Valeo Powertrain Systems

(57) **Abstract**

The present disclosure relates to a drivetrain system for an electrified vehicle. The drivetrain system comprises an electric motor configured for providing with drive power and comprising a rotor and a driveshaft driven by the rotor; a speed reducer configured for speed-reducing and increasing torque received from the driveshaft, the speed reducer comprising an intermediate transmission shaft with a hollow axial passage; and a pumping component configured for transferring lubricant. The pumping component is mechanically integrated on and driven by the intermediate transmission shaft, and comprises a plurality of passages for supplying lubricant into the hollow axial passage of the intermediate transmission shaft and to the components dispositioned onto the intermediate transmission shaft.

## Description

### FIELD OF THE INVENTION

Embodiments of the present disclosure relate generally to a drivetrain system for an electrified vehicle, especially for the integrated lubrication circuit for the drivetrain system.

### BACKGROUND OF THE INVENTION

The trend towards designing and building fuel efficient, low emission vehicles has increased dramatically, this trend driven by concerns over the environment as well as increasing fuel costs. At the forefront of this trend has been the development of electrified vehicles, such as BEV, HEV, PHEV, Range extended EV, Fuel Cell etc., electrified vehicles that combine a relatively efficient combustion engine with an electric drive motor. Electrified vehicles can include rotating components, particularly the drivetrain system, that needs to be lubricated to achieve a long service life of the rotating components. Generally, in order to achieve an adequate supply of lubricant, the differential comprised of the drivetrain system includes a reservoir containing lubricant to be transferred to the rotating components all over the drivetrain system for lubrication via at least one rotating component that is comprised of the differential and contacts with the lubricant, the lubricant however shall be always kept in a high level in the reservoir of the differential, therefore, the churning loss of the differential wheel and the power loss of the entire drivetrain system would be high. Alternatively, nozzels are generally used for active lubricating to a specific rotating component, otherwise, it would generate additional cost and process.

Therefore, it would be desirable if any improvements on lubrication design for the drivetrain system for electrified vehicles could be provided at least with simple configuration, low energy consumption or loss, and low cost.

### SUMMARY OF THE INVENTION

Aspects and advantages of the invention will be set forth in part in the following description, or may be obvious from the description, or may be learned through practice of the invention.

In accordance with one aspect disclosed herein, a drivetrain system for an electrified vehicle is provided. The drivetrain system comprises an electric motor configured for providing with drive power and comprising a rotor and a driveshaft driven by the rotor; a speed reducer configured for speed-reducing and increasing torque received from the driveshaft, the speed reducer comprising an intermediate transmission shaft with a hollow axial passage; and a pumping component configured for transferring lubricant. The pumping component is mechanically integrated on and driven by the intermediate transmission shaft, and comprises a plurality of passages for supplying lubricant into the hollow axial passage of the intermediate transmission shaft and to the components dispositioned onto the intermediate transmission shaft.

In one embodiment, the plurality of passages comprise: at least one transverse passage for supplying lubricant into the hollow axial passage of the intermediate transmission shaft; and at least one longitudinal passage for supplying lubricant onto the components dispositioned onto the intermediate transmission shaft.

In one embodiment, the pumping component further comprises a pumping shaft coaxially integrated with the intermediate transmission shaft and configured for actuating the pumping component for supplying lubricant.

In one embodiment, the plurality of passages further comprise an axial passage inside the pumping shaft, the axial passage being fluidly in communication with the hollow axial passage of the intermediate transmission shaft.

In one embodiment, the axial passage is further fluidly in communication with the at least one transverse passage.

In one embodiment, the pumping shaft is actuated by a coupling component which is connected with the intermediate transmission shaft and the pumping shaft in a fixed manner.

In one embodiment, the coupling component is a sleeve.

In one embodiment, the coupling component is a one-way clutch configured for always rotating in one direction.

In one embodiment, the coupling component comprises a connecting portion which prevents the lubricant returning from or leaking out of the hollow axial passage of the intermediate transmission shaft.

In one embodiment, the at least one longitudinal passage is fluidly in communication with a circular gap provided between the pumping shaft and the intermediate transmission shaft so that lubricant could be supplied to the components dispositioned onto the intermediate transmission shaft through the circular gap.

In one embodiment, the circular gap is provided laterally adjoining with a bearing supporting the intermediate transmission shaft so that lubricant could be supplied to the bearing through the circular gap.

In one embodiment, the intermediate transmission shaft further comprises at least one radial passages being fluidly in communication with the hollow axial passage for transferring lubricant to the components dispositioned onto the intermediate transmission shaft.

In one embodiment, the pumping component further comprises a cavity configured for storing the lubricant to be supplied by the plurality of passages.

In one embodiment, the at least one transverse passage radially extends from the cavity for transferring the lubricant stored in the cavity, and the at least one of longitudinal passage axially extends from the cavity for transferring the lubricant stored in the cavity.

In one embodiment, the pumping component is a gerotor pump.

In one embodiment, the pumping component is configured for supplying lubricant in a single direction when the pumping component is driven to rotate.

In one embodiment, the drivetrain system further comprises: a differential apparatus configured for distributing speed-reduced drive power to driven mechanical load; and a disconnectable clutch provided onto the intermediate transmission shaft and configured for providing with interruptive transmission of the drive power between the speed reducer and the differential apparatus; the pumping component will transfer lubricant to provide with active lubrication for the speed reducer, minimizing the level of lubricant in which the differential apparatus is plunged.

In one embodiment, the drivetrain system further comprises an actuator coaxially disposed with the disconnectable clutch and configured for mechanically providing the disconnectable clutch with an engagement and non-engagement force.

In one embodiment, the actuator is a solenoid.

In one embodiment, the actuator is cooled down by the lubricant from at least one radial passages being fluidly in communication with a hollow axial passage of the intermediate transmission shaft.

These and other features, aspects, and advantages of the present disclosure will become better understood with reference to the following detailed description. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 is a schematic view of a drivetrain system in accordance with an exemplary aspect of the present disclosure;
FIG.2 is one sectional illustration of intermediate transmission shaft of the drivetrain system according to FIG.1;
FIG.3 is another sectional illustration of intermediate transmission shaft of the drivetrain system according to FIG.1, showing the transverse passage for supplying lubricant into the hollow axial passage of the intermediate transmission shaft; and
FIG.4 is another sectional illustration of intermediate transmission shaft of the drivetrain system according to FIG.1, showing the radial passages of the intermediate transmission.

### DETAILED DESCRIPTION OF THE INVENTION

Reference will now be made to in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "a", "an" and "the" are intended to mean that there are one or more of the elements unless the context clearly dictates otherwise. The terms "comprising", "including" and "having" are intended to be inclusive and mean that there may be additional elements other than the listed elements. The terms "first" and "second" may be used interchangeably to distinguish one component from another and are not intended to signify location or importance of individual components.

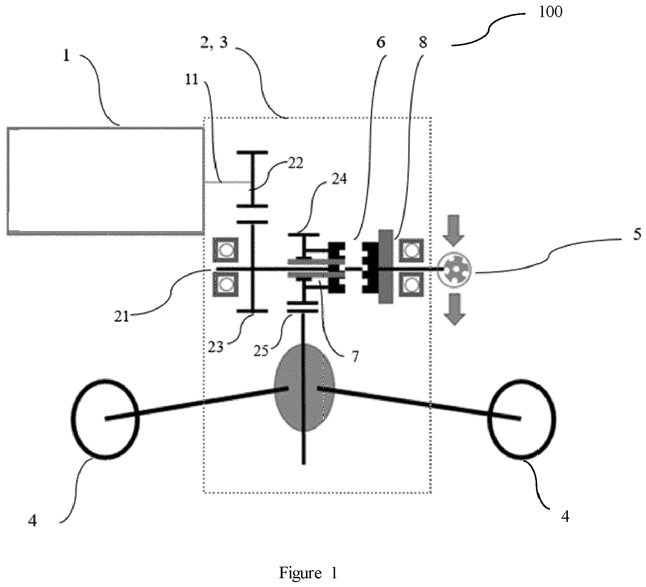

Referring now to the drawings, wherein identical numerals indicate the same elements throughout the figures, FIGs 1 through 4 show a drivetrain system 100 in accordance with embodiments of the present disclosure. More particularly, the drivetrain system 100 is generally integrated with an inverter (not shown), an electric motor 1, a speed reducer 2 and a differential apparatus 3. Specifically, the electric motor 1 is contained in one housing, the speed reducer 2 and the differential apparatus 3 are contained in another housing. The two housings can be one-piece or be formed by an assembly of housing sub-parts together. The two housings can be rigidly fixe d together, for example by means of screws. A sealing wall is here provided between the two housings.

The electric motor 1 can be a synchronous motor or an asynchronous motor. When it is a synchronous motor, it may include a wound rotor or a permanent magnet rotor. The nominal power supplied by the electric motor can be between 10 KW and 300 KW, for example, of the order of 15 KW, for a nominal supply voltage of 48V to 350V, or up to 800V for higher power. In the case of an electric motor adapted to a high voltage supply, the nominal power supplied by this electric motor may be 300 KW. In the illustrated embodiment, the electric motor 1 is a synchronous motor with permanent magnets, providing a nominal power between 10 KW and 300 KW. The electric motor 1 can include a stator with a three-phase winding, or a combination of two three-phase windings or five-phase windings. Furthermore, the electric motor 1 can include a driveshaft 11 driven by the electrical power generated from the electromagnetic effect of a rotor (not shown) and a stator (not shown) included in the electric motor 1.

The inverter is attached by the electrical wires to the electric motor 1. The inverter converts the direct current ("DC") supplied by an electrical energy storage unit (not shown) providing with the electric energy of a nominal voltage to the alternating current ("AC") used to the electric motor 1. The inverter can be, without limitation, field effect transistors ("FETs"), metal oxide semiconductor field effect transistors ("MOSFETs") or insulated gate bipolar transistors ("IGBTs"). In the case of a nominal supply voltage of 48V, the inverter can be MOSFET transistors. In the case of a supply voltage corresponding to a high voltage, the inverter can be IGBTs.

The speed reducer 2 is coupling to the electric motor 1. The speed reducer 2 can transform the electric motor's high speed, low torque to low speed, high torque. The speed reducer 2 may comprise a plurality of reduction gear sets with different ratios and connecting with the electric motor 1 and the differential apparatus 3, with one of the gears driven by the electric motor 1 for instance, for torque increasing via speed reduction. The speed reducer 2 may further comprise an intermediate transmission shaft 21, linking a driving gear driven by the driveshaft shaft 11 and another gear of larger diameter coupled to the differential apparatus 3 for distributing speed-reduced drive power to driven wheels 4.

In the illustrated embodiment, the speed reducer 2 comprises two reduction gears sets, including a first set of reduction gears comprising a first driving gear 22 connected to the electric motor 1 and a first driven gear 23 connected to the intermediate shaft 21, the first driving gear 22 and driven gear 23 being in engagement with each other; and a second set of reduction gears comprising a second driving gear 24 connected to the intermediate shaft 21 and a second driven gear 25 connected to the differential apparatus 3, the second driving gear 24 and driven gear 25 being in engagement with each other.

In the illustrated embodiment, a disconnectable clutch 6 is provided for providing with interruptive transmission of the drive power between the electric motor 1 and the differential apparatus 3. The disconnectable clutch 6 is disposed onto the intermediate transmission shaft 21, further solidly linking with the second driving gear 24. In one embodiment, the disconnectable clutch 6 can be further solidly linking with the first driven gear 23. When the disconnectable clutch 6 is in engagement, driving power of the electric motor 1 can be transferred to the vehicle via the speed reducer 2 and the clutch 6 to provide an auxiliary driving power.

A bearing 7 is further provided for supporting the disconnectable clutch 6, the second driving gear 24 is rolling on the bearing 7 coaxially disposed on the intermediate transmission shaft 21. In one embodiment, the first driven gear 23 will be rolling on the bearing 7 if the clutch 6 is solidly linking with the first driven gear 23.

An actuator 8 is further provided for electrically providing the disconnectable clutch 6 with an engagement and non-engagement force. Particularly, the actuator 8 is disposed on the intermediate transmission shaft 21 and electrically connected with the clutch 6. In one embodiment, the actuator 8 can be a solenoid. In the circumstance that requires an auxiliary driving power to the vehicle, the actuator 8 will be power on and provide with an engagement force to let the disconnectable clutch be in engagement state, further drive the intermediate transmission shaft 21 where the disconnectable clutch 6 are disposed to rotate, and finally drive the differential apparatus 3 via the reduction gears to provide drive power to the vehicle.

Still in the illustrated embodiment, a pumping component 5 is further provided for transferring lubricant throughout the drivetrain system 100, particularly for providing with active lubrication for the speed reducer 2 via pumping the lubricant in a reservoir (not shown) contained in the differential apparatus 3. In the circumstance that the disconnectable clutch 6 is in non-engagement state, the pumping component 5 would be always working, i.e., keep pumping the lubricant from the differential apparatus 3 so that the electric motor can be continuously cooled down.

In one embodiment, the pumping component 5 may be a mechanical pump, for instance a gerotor pump which can be mechanically integrated on and driven by the intermediate transmission shaft 21. Further, when the pumping component 5 is driven to rotate such as in a clockwise direction or in an anticlockwise direction, the pumping component 5 will always supply lubricant in a single direction so as to prevent the lubricant from flowing back resulting unnecessary air bubbles generated in the lubricant.

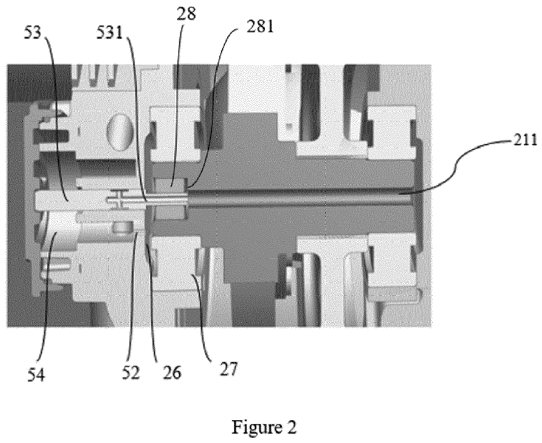

Referring to FIGs 2 to 3, the pumping component 5, provided at one end of the intermediate transmission shaft 21, comprises a cavity 54 for storing lubricant inside the pumping component 5. Further, the pumping component 5 comprises a plurality of internal passages for receiving lubricant from the cavity 54 and supplying the lubricant into a hollow axial passage 211 of the intermediate transmission shaft 21 as well as directly to the outside components positioned onto the intermediate transmission shaft 21.

The pumping component 5 further comprises a pumping shaft 53 coaxially integrated with the intermediate transmission shaft 21. A coupling component 28 is further provided for connecting with the intermediate transmission shaft 21 and the pumping shaft 53 in a fixed manner, so that the pumping shaft 53 can be rotationally fixed and axially fixed to the transmission shaft 21. In one embodiment, the coupling component 28 can be a sleeve. The pumping shaft 53 is actuated by the transmission shaft via the coupling component 28, then he pumping component 5 is actuated for supplying lubricant. Due to the high pressure generated by the actuation of the pumping component 5, the lubricant in the cavity 54 will flow out through the plurality of passages inside the pumping component 5. In one embodiment, if the pumping component 5 is not configured for supplying lubricant in a single direction, the coupling component 28 can be a one-way clutch which allows rotation in one direction and prevents force from being driven in the opposite direction, such that the pumping shaft 53 is actuated by the coupling component 28, i.e., a one-way clutch, to only work in a forward rotation direction and the lubricant will flow only in a single direction.

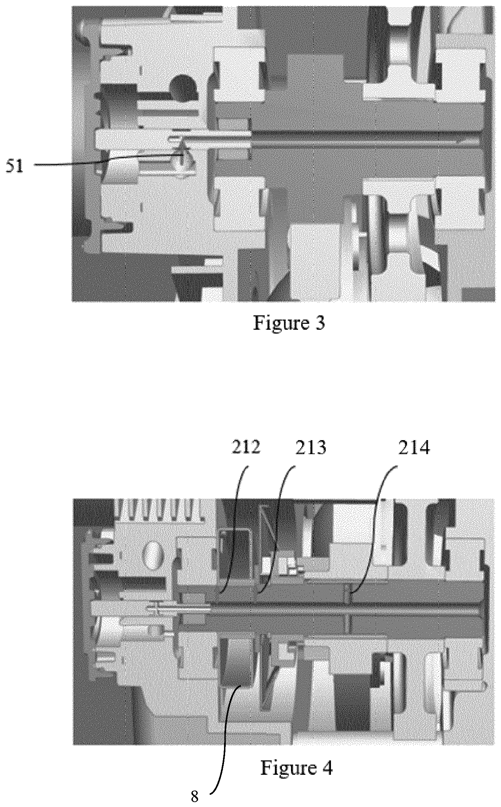

For the embodiment depicted, the plurality of passages comprise axial passage 531 inside the pumping shaft 53, the axial passage being fluidly in communication with the hollow axial passage 211 of the intermediate transmission shaft 21. As shown in Fig.3, the plurality of passages further comprise at least one transverse passage 51 radially extending from the cavity 54 for transferring the lubricant stored therein. The axial passage 531 is further fluidly in communication with the at least one transverse passage 51 so that the lubricant contained in the cavity 54 can be transferred into the axial passage 531 by the transverse passage 51, further into the hollow axial passage 211 of the intermediate transmission shaft 21. It allows the lubrication of the bearing at the end of the intermediate shaft.

In one embodiment, the coupling component 28 comprises a connecting portion 281 which is positioned in a radial surface between the axial passage 531 of the pumping shaft 5 and the hollow axial passage 211 of the intermediate transmission shaft 21. The connecting portion 281 is designed for preventing the lubricant returning from or leaking out of the hollow axial passage 211 of the intermediate transmission shaft 21. This kind of configuration is also used for actuating the pumping component 5.

As shown in Fig.2, the plurality of passages further comprise at least one longitudinal passage 52 for supplying lubricant onto the components dispositioned onto the intermediate transmission shaft axially extending from the cavity 54. The at least one longitudinal passage 52 is fluidly in communication with a circular gap 26 provided between the pumping shaft 53 and the intermediate transmission shaft 21 so that lubricant contained in the cavity 54 can be supplied to the components dispositioned onto the intermediate transmission shaft 21 through longitudinal passage 52 and the circular gap 26.

Still in the illustrated embodiment, the circular gap 26 is provided laterally adjoining with a bearing 27 supporting the intermediate transmission shaft 21. Lubricant can flow out of the longitudinal passage 52 and through the circular gap 26 towards the bearing 27 for lubricating.

As shown in Fig.4, the intermediate transmission shaft 21 further comprises at least one circumferentially distributed radial passages 212, 213, 214 being fluidly in communication with the hollow axial passage 211 for transferring lubricant to the components dispositioned onto the intermediate transmission shaft 21. In this way lubricant can flow from the inside of the intermediate transmission shaft 21 to the seat portion of the driving gear 24, the driven gear 23, the actuator 8, the bearing 7 and other components for lubricating. For the embodiment depicted, the actuator 8 which is a solenoid can be cooled down with the lubrication projection, particularly by the lubricant flowing from the radial passage 212, 213.

This written description uses examples to disclose the embodiments of the present disclosure, including the best mode, and also to enable any person skilled in the art to practice embodiments of the present disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A drivetrain system for an electrified vehicle, comprising:
an electric motor configured for providing with drive power and comprising a rotor and a driveshaft driven by the rotor;
a speed reducer configured for speed-reducing and increasing torque received from the driveshaft, the speed reducer comprising an intermediate transmission shaft with a hollow axial passage; and
a pumping component configured for transferring lubricant, mechanically integrated on and driven by the intermediate transmission shaft, the pumping component comprises a plurality of passages for supplying lubricant into the hollow axial passage of the intermediate transmission shaft and to the components dispositioned onto the intermediate transmission shaft.

2. The drivetrain system of claim 1, wherein the plurality of passages comprise:
at least one transverse passage for supplying lubricant into the hollow axial passage of the intermediate transmission shaft; and
at least one longitudinal passage for supplying lubricant onto the components dispositioned onto the intermediate transmission shaft.

3. The drivetrain system of claim 1 or 2, wherein the pumping component further comprises a pumping shaft coaxially integrated with the intermediate transmission shaft and configured for actuating the pumping component for supplying lubricant.

4. The drivetrain system of claim 3, wherein the plurality of passages further comprise an axial passage inside the pumping shaft, the axial passage being fluidly in communication with the hollow axial passage of the intermediate transmission shaft.

5. The drivetrain system of claim 4, wherein the axial passage is further fluidly in communication with the at least one transverse passage.

6. The drivetrain system of claim 3, wherein the pumping shaft is actuated by a coupling component which is connected with the intermediate transmission shaft and the pumping shaft in a fixed manner.

7. The drivetrain system of claim 6, wherein the coupling component is a sleeve, or a one-way clutch configured for always rotating in one direction.

8. The drivetrain system of claim 6, wherein the coupling component comprises a connecting portion which prevents the lubricant returning from or leaking out of the hollow axial passage of the intermediate transmission shaft.

9. The drivetrain system of claim 3, wherein the at least one longitudinal passage is fluidly in communication with a circular gap provided between the pumping shaft and the intermediate transmission shaft so that lubricant could be supplied to the components dispositioned onto the intermediate transmission shaft through the circular gap.

10. The drivetrain system of claim 9, wherein the circular gap is provided laterally adjoining with a bearing supporting the intermediate transmission shaft so that lubricant could be supplied to the bearing through the circular gap.

11. The drivetrain system of claim 1, wherein the intermediate transmission shaft further comprises at least one radial passages being fluidly in communication with the hollow axial passage for transferring lubricant to the components dispositioned onto the intermediate transmission shaft.

12. The drivetrain system of claim 2, wherein the pumping component further comprises a cavity configured for storing the lubricant to be supplied by the plurality of passages; at least one transverse passage radially extends from the cavity for transferring the lubricant stored in the cavity, and the at least one of longitudinal passage axially extends from the cavity for transferring the lubricant stored in the cavity.

13. The drivetrain system of claim 1, wherein the pumping component is configured for supplying lubricant in a single direction when the pumping component is driven to rotate.

14. The drivetrain system of claim 1, the drivetrain system further comprises:
a differential apparatus configured for distributing speed-reduced drive power to driven wheels; and
a disconnectable clutch provided onto the intermediate transmission shaft and configured for providing with interruptive transmission of the drive power between the electric motor and the differential apparatus;
wherein the pumping component is configured for transferring lubricant to provide with active lubrication for the speed reducer, minimizing the level of lubricant in which the differential apparatus is plunged.

15. The drivetrain system of claim 14, the drivetrain system further comprises:
an actuator coaxially disposed with the disconnectable clutch and configured for providing the disconnectable clutch with an engagement and non-engagement force, the actuator is cooled down by the lubricant from at least one radial passages being fluidly in communication with a hollow axial passage of the intermediate transmission shaft.
